Europäisches Patentamt

European Patent Office

Office européen des brevets

(11) Veröffentlichungsnummer: **0 375 962**
**A2**

(12) **EUROPÄISCHE PATENTANMELDUNG**

(21) Anmeldenummer: **89121965.1**

(22) Anmeldetag: **28.11.89**

(51) Int. Cl.⁵: **F24H 1/18, F24H 9/20**

(30) Priorität: **24.12.88 DE 3843942**

(43) Veröffentlichungstag der Anmeldung:
**04.07.90 Patentblatt 90/27**

(84) Benannte Vertragsstaaten:
**AT BE CH DE ES FR GB IT LI NL SE**

(71) Anmelder: **Esser, Hans-Peter**
**Moosweg 3**
**D-5010 Bergheim 5(DE)**

(72) Erfinder: **Esser, Hans-Peter**
**Moosweg 3**
**D-5010 Bergheim 5(DE)**

(74) Vertreter: **Louis, Walter, Dipl.-Ing.**
**Patentanwälte Dipl.-Ing. Walter Louis**
**Dipl.-Ing. Günter Louis Stubertal 3**
**D-4300 Essen 1(DE)**

(54) **Heisswassergerät.**

(57) Das Heißwassergerät besitzt einen eine elektrische Heizung aufweisenden Behälter zur drucklosen Erhitzung einer durch eine absperrbare Zulaufleitung eingefüllten und eine absperrbare Entnahmeleitung ablassbaren Wassermenge. Der Behälter ist in dem Gerätegehäuse auf einer elektronischen Waage angeordnet, die in Abhängigkeit von dem gemessenen Gewicht der Wassermenge im Behälter ein elektrisch betätigbares Absperrventil des Gerätes im Kaltwasserzulauf und/oder im Heißwasserablauf steuert.

EP 0 375 962 A2

## Heißwassergerät

Die Erfindung bezieht sich auf ein Heißwassergerät mit einem eine elektrische Heizung aufweisenden Behälter zur drucklosen Erhitzung einer durch eine absperrbare Zulaufleitung eingefüllten und durch eine absperrbare Entnahmeleitung ablaßbaren Wassermenge.

Die gebräuchlichen Heißwassergeräte der vorgenannten Art, die auch als Kochendwassergeräte bezeichnet werden, besitzen von Hand zu betätigende Ventile für das Einlassen von kaltem Wasser in den Behälter und für das Ablassen von erhitztem Wasser aus dem Behälter. Die hierbei erforderliche Belüftung des Behälters erfolgt durch ein den höchsten Wasserstand im Behälter begrenzendes überlaufrohr. Die Befüllung oder auch die Entleerung des Behälters wird mit dem in einem Wasserstandsschauglas des Behälters sichtbaren Wasserstand im Behälter angezeigt. Dazu besitzt das Schauglas üblicherweise nur in Halbliter-Abständen Wasserstandsmarkierungen zum ungefähren Ablesen der Wassermenge. Zwischenmengen können nur annäherungsweise geschätzt werden. Zur Vermeidung von Schäden beim Einlassen von kaltem Wasser in den heißen Behälter ist der Kaltwassereintritt üblicherweise mit einer Zulaufdrossel verlangsamt. Dies führt vor allem bei größerer Befüllung des üblicherweise bis zu 5 Litern fassenden Behälters zu einer entsprechenden Wartezeit, bis das Einlaßventil wieder von Hand geschlossen werden kann. Die elektrische Heizung wird unabhängig von der Betätigung des Einlaßventils von Hand eingeschaltet und kann versehentlich auch bei noch leerem Behälter eingeschaltet werden, wodurch trotz des vor handenden Sicherheitsthermostaten ein Geräteschaden durch Überhitzung entstehen kann.

Die Erfindung hat zur Aufgabe, ein Heißwassergerät der eingangs angegebenen Art zu schaffen, bei dem gewünschte Wassermengen, zum Beispiel auch sehr kleine Wassermengen von nur wenigen Millilitern, sehr genau abgelesen, eingefüllt und entnommen werden können und welches auf Knopfdruck selbsttätig das Kaltwasserzulaufventil öffnet und bei Befüllung des Behälters mit einer vorbestimmten gewünschten Wassermenge das Zulaufventil wieder schließt und die elektrische Heizung einschaltet oder auch auf Knopfdruck durch selbsttätiges Öffnen und Schließen des Heißwasserentnahmeventils eine vorbestimmte gewünschte Heißwassermenge abgibt.

Diese Aufgabe wird erfindungsgemäß in erster Linie dadurch gelöst, daß der Behälter im Gerätegehäuse auf einer elektronischen Waage angeordnet ist, die in Abhängigkeit von dem gemessenen Gewicht der Wassermenge im Behälter ein elektrisch betätigbares Absperrventil des Gerätes steuert. Vorteilhafte weitere Ausgestaltungsmerkmale des erfindungsgemäßen Heißwassergerätes sind in den Unteransprüchen angegeben.

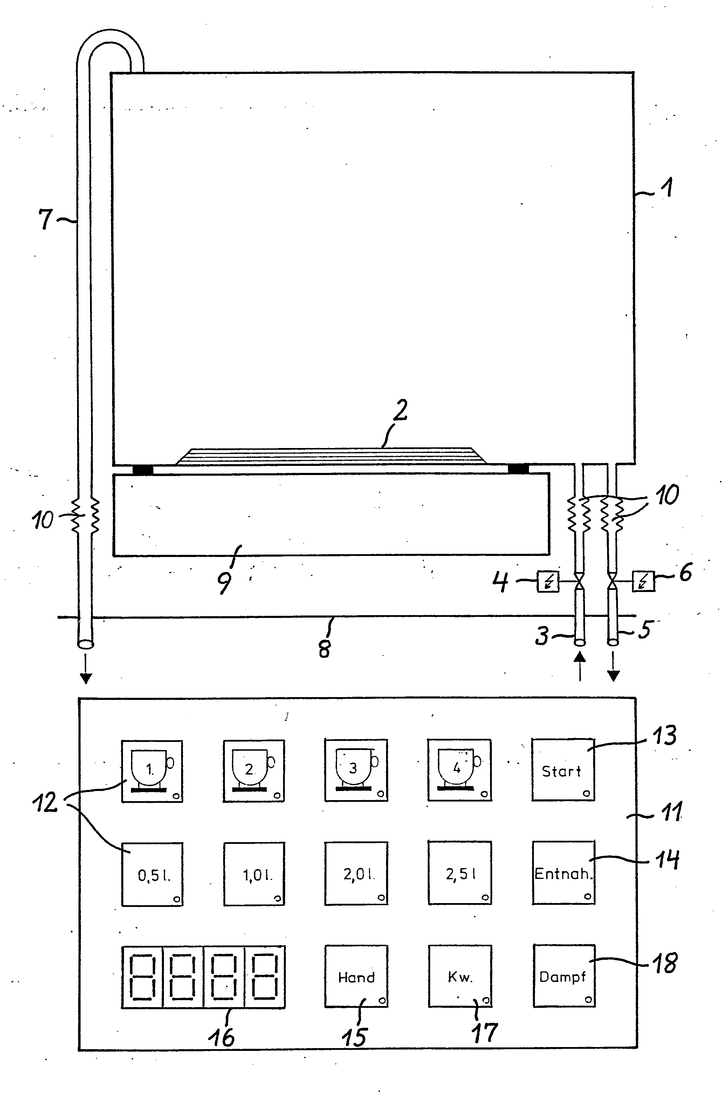

Das erfindungsgemäße Heißwassergerät wird anhand der Zeichnung näher beschrieben, die ein Ausführungsbeispiel in schematischer Darstellung zeigt.

Das dargestellte Heißwassergerät besitzt für die drucklose Erhitzung von Wasser einen Behälter 1 mit einer elektrischen Heizung 2, eine Zulaufleitung 3 für Kaltwasser mit einem elektrisch betätigbaren Zulaufventil 4 und eine Entnahmeleitung 5 für Heißwasser mit einem elektrisch betätigbaren Entnahmeventil 6. Die elektrische Heizung 2 ist durch Betätigen einer entsprechend geeigneten elektrischen Schalt- und Steuerungseinrichtung des Gerätes von der konventionellen thermostatisch geregelten Heißwasserbereitung auf eine Fortheizstufe oberhalb der Siedetemperatur umschaltbar, um mit dem Gerät nicht nur warmes oder kochendheißes Wasser, sondern auch Nutzdampf für beliebige Haushalts-Dampfverbraucher, wie z. B. Dampfgarer oder Entsaftergeräte und dergleichen mehr erzeugen zu können. Zum Zwecke der Nutzdampferzeugung ist der Behälter 1 nach oben geschlossen und mit einem in den oberen Bereich des Behälters eingeführten Rohr 7 versehen, das zur Belüftung des Behälters beim Einfüllen oder Ablassen von Wasser und gleichzeitig auch als Dampfentnahmerohr dient, wozu das Rohr 7 an seinem aus dem Gerät herausgeführten Ende mit einem nicht näher dargestellten, z. B. aus einer Schraub- oder Steckkupplung bestehenden Anschluß für eine Dampfschlauchleitung versehen ist. In dem nur angedeuteten Gerätegehäuse 8 ist der Behälter 1 auf einer elektronischen Waage 9 angeordnet, die mit einem zur Durchführung der verschiedenen Gerätefunktionen programmierten bzw. ansteuerbaren Mikroprozessor versehen oder verbunden ist und über diesen die Ventile 4 und 6 in Abhängigkeit des von der Waage gemessenen Gewichtes der Wassermenge im Behälter 1 steuert. Flexible Schlauchstücke 10 sind in den Leitungen 3 und 5 zwischen den Ventilen 4 und 6 und dem Behälter 1 sowie in dem Rohr 7 angeordnet, damit sich der Behälter 1 auf der elektronischen Waage 9 gegenüber den fest im Gerätegehäuse angeordneten Ventilen 4 und 6 und gegenüber dem fest im Gerätegehäuse angeordneten Anschlußende des Rohres 7 für eine Dampfschlauchleitung bewegen kann.

Die Bedienung des Heißwassergerätes bzw. Steuerung des Mikroprozessors der elektronischen Waage 9 erfolgt mit Sensortasten an einem Bedienungsfeld 11, das durch nicht näher dargestellte elektrische Leitungen an den Mikroprozessor der Waage 9 angeschlossen ist. Das Bedienungsfeld 11 kann direkt an dem Heißwassergerät angeordnet sein, es kann auch als ein von dem Heißwassergerät getrenntes Terminal auf dem Arbeitstisch stehen und durch eine Verbindungsleitung na das Heißwassergerät angeschlossen sein. Das Bedienungsfeld 11 besitzt Tasten 12, durch deren Drücken dem Mikroprozessor der Befehl gegeben wird, welche Wassermenge, beispielsweise welche Anzahl von Tassen oder welche Litermenge, in den Behälter 1 eingefüllt oder aus dem Behälter 1 abgelassen werden soll. Durch Drücken einer Befülltaste 13 wird die Funktion des Befüllens des Behälters 1 ausgelöst, für die der Mikroprozessor automatisch das Kaltwasserzulaufventil 4 öffnet und beim Erreichen des Gewichtes oder Volumens der gewünschten Behälterbefüllung, die an einer der Tasten 12 der elektronischen Waage eingegeben worden ist, schließt. Vorzugsweise kann die elektrische Schalt- und Steuerungseinrichtung des Heißwassergerätes so ausgebildet sein, daß über die Befülltaste 13 auch die Einschaltung der elektrischen Heizung 2 erfolgt, und zwar erst dann, wenn der Behälter 1 mit der jeweils gewünschten Wassermenge befüllt ist. Dies vermeidet die Möglichkeit bzw. die Gefahr, daß die elektrische Heizung 2 unbeabsichtigt bei noch leerem Behälter 1 eingeschaltet wird. Nach der Erhitzung der Behälterbefüllung auf eine z.B. an einem Thermostatregler in üblicher Weise einstellbare Heißwassertemperatur wird durch Drücken einer Entnahmetaste 14 die Funktion des Ablassens von Heißwasser ausgelöst, wozu der Mikroprozessor automatisch das Heißwasserentnahmeventil 6 öffnet und beim Erreichen des Gewichtes oder Volumens der gewünschten Heißwasserentnahmemenge, die der elektronischen Waage mit einer der Mengentasten 12 eingegeben worden ist, schließt. Der mit der vorstehend geschilderten Technik verbundene Vorteil des erfindungsgemäßen Heißwassergerätes ist, daß sehr genau diejenige Kaltwassermenge in den Behälter 1 eingefüllt ist, die auch als Heißwassermenge gewünscht wird und erhitzt werden soll, wodurch sehr viel Wasser und vor allem auch elektrische Heizenergie eingespart wird. Die Bedienungsperson braucht den Kaltwasser-Befüllvorgang wie auch den Heißwasser-Entnahmevorgang nur durch Tastendruck einzuleiten und kann sich dann von dem Gerät entfernen, welches dann selbsttätig den Befüllvorgang bzw. den Entleerungsvorgang beendet. Um auch solche Wassermengen z. B. als Heißwasser dem Gerät entnehmen zu können, die von den vorprogrammierten, den Tasten 12 zugeordneten Wassermengen abweichen, enthält das Bedienungsfeld 11 eine Handbedienungstaste 15. Die durch Drücken dieser Taste 15 dem Behälter 1 entnommene Wassermenge kann an einer Digitalanzeige 16 des Bedienungsfeldes 11 genau abgelesen werden. Mit einer elektronischen Waage, die z. B. alle 2 Gramm einen von dem Mikroprozessor verstärkten Impuls sendet, können also beliebige Heißwassermengen bis auf 2 Gramm genau dem Gerät entnommen werden. Gleichartig kann auch eine Handbedienung zum Einfüllen beliebiger Kaltwassermengen in den Behälter 1 vorgesehen sein. An dem Bedienungsfeld 11 ist weiterhin eine Kaltwassertaste 17 vorgesehen, mittels der ähnlich wie bei konventionellen Kochendwassergeräten Kaltwasser aus einem direkten Kaltwasserauslauf des Gerätes entnommen werden kann. Für den Betrieb des Heißwassergerätes zur Erzeugung von Nutzdampf enthält das Bedienungsfeld 11 eine Dampftaste 18. Durch Drücken dieser Taste 18 öffnet der Mikroprozessor der elektronischen Waage 9 zunächst das Kaltwassereinlaßventil 4, bis sich in dem Behälter 1 eine vorprogrammierte bestimmte Behälterbefüllung befindet, über der in dem Behälter 1 ein Dampfsammelraum für den über das Rohr 7 zu entnehmenden Wasserdampf verbleibt. Ferner wird von dem Mikroprozessor die elektrische Heizung 2 von der thermostatisch geregelten Heißwasserbereitung auf eine Fortzeizstufe für die Nutzdampferzeugung umgeschaltet. Die Dauer der Einschaltphase der Fortheizstufe wird durch die elektronische Waage 9 gesteuert, die den Nutzdampferzeugungsbetrieb beendet, sobald sich das Anfangsgewicht der Behälterbefüllung um ein der Waage eingegebenes Gewicht der zu verdampfenden Wassermenge verringert hat. Zusätzlich kann das Gerät mit einem nicht näher dargestellten Zeit- und Intervalschalter ausgebildet sein, um die Einschaltphase der Fortheizstufe nach Ablauf einer bestimmten Dampferzeugungszeit zu beenden oder um für bestimmte Dampfan wendungsfälle die Dampferzeugung in Intervalen bzw. in Dampfstößen vorzunehmen. Sofern das Gerät zusätzlich zu dem Rohr 7 für die Nutzdampfentnahme aus Sicherheitsgründen mit einem Überlaufrohr ausgebildet ist, kann das überlaufrohr ein ebenfalls von dem Mikroprozessor elektrisch betätigbares Absperrventil enthalten, welches bei der Umschaltung des Gerätes auf die Fortheizstufe für die Nutzdampferzeugung das Überlaufrohr gegen Dampfaustritt schließt, so daß der erzeugte Wasserdampf nur durch das Dampfentnahmerohr 7 austreten kann.

## Ansprüche

1. Heißwassergerät mit einem eine elektrische Heizung aufweisenden Behälter zur drucklosen Erhitzung einer durch eine absperrbare Zulaufleitung eingefüllten und durch eine absperrbare Entnahmeleitung ablassbaren Wassermenge, dadurch gekennzeichnet, daß der Behälter (1) im Gerätegehäuse (8) auf einer elektronischen Waage (9) angeordnet ist, die in Abhängigkeit von dem gemessenen Gewicht der Wassermenge im Behälter ein elektrisch betätigbares Absperrventil (4 bzw. 6) des Gerätes steuert.

2. Heißwassergerät nach Anspruch 1, dadurch gekennzeichnet, daß die Waage (9) bei Betätigung einer Befülltaste (13) ein elektrisches Kaltwasserzulaufventil (4) öffnet und beim Erreichen des der Waage eingegeben Gewichtes oder Volumens der gewünschten Behälterbefüllung selbsttätig das Kaltwasserzulaufventil schließt und vorzugsweise auch die auf eine gewünschte Heißwassertemperatur einstellbare elektrische Heizung (2) einschaltet.

3. Heißwassergerät nach Anspruch 1 oder 2, dadurch gekennzeichnet, daß die Waage (9) bei Betätigung einer Entnahmetaste (14) ein elektrisches Heißwasserentnahmeventil (6) öffnet und beim Erreichen des der Waage eingegebenen Gewichtes oder Volumens der gewünschten Heißwasserentnahmemenge selbsttätig schließt.

4. Heißwassergerät nach einem der Ansprüche 1 bis 3, dadurch gekennzeichnet, daß der Behälter (1) eine Dampfentnahmeleitung (7) besitzt und die Waage (9) bei Betätigung einer Dampftaste (18) das Kaltwasserzulaufventil für eine an der Waage vorprogrammierte Behälterbefüllung betätigt sowie die elektrische Heizung (2) auf eine Fortheizstufe für die Nutzdampferzeugung mittels des Gerätes umschaltet.

5. Heißwassergerät nach Anspruch 4, dadurch gekennzeichnet, daß die Einschaltphase der Fortheizstufe durch die Waage (9) in Abhängigkeit von dem eingegebenen Gewicht oder Volumen einer zu verdampfenden Wassermenge und/oder durch einen Zeit- und Intervalschalter des Gerätes gesteuert ist.